Europäisches Patentamt

European Patent Office

Office européen des brevets

(11) Publication number : **0 511 925 A2**

(12) **EUROPEAN PATENT APPLICATION**

(21) Application number : **92480041.0**

(22) Date of filing : **13.03.92**

(51) Int. Cl.⁵ : **H04L 12/24**

(30) Priority : **30.04.91 US 693483**

(43) Date of publication of application :
**04.11.92 Bulletin 92/45**

(84) Designated Contracting States :
**DE FR GB**

(71) Applicant : **International Business Machines
Corporation
Old Orchard Road
Armonk, N.Y. 10504 (US)**

(72) Inventor : **Allen, Michael Odis
713 Silverleaf Place
Raleigh, NC 27609 (US)**
Inventor : **Benedict, Sandra Lyn
116 Talon Drive
Cary, NC 27511 (US)**
Inventor : **Golberg, Steven Myer
3304 Carrack Court
Raleigh, NC 27613 (US)**
Inventor : **Joyce, Steven Thomas
6241 Waterside Lane
Raleigh, NC 27613 (US)**
Inventor : **Lee, Jeannette
9908 Two Robins Court
Raleigh, NC 27613 (US)**
Inventor : **McKelvey, Mark Ambrose
114 23rd Street, SW
Rochester, MN 55902 (US)**

(74) Representative : **de Pena, Alain
Compagnie IBM France Département de
Propriété Intellectuelle
F-06610 La Gaude (FR)**

(54) **Dynamic backup and recovery of focal points in a computer network.**

(57)   In a focal point network, adjacent nodes may agree to a relationship where one, a primary focal point or server node, supplies a network management service to the other, a non-focal point or served node. According to the invention, the primary focal point identifies a backup focal point node in the course of establishing the relationship. If communications between the primary node and the served node fail, the served node solicits the previously identified backup node to assume the responsibility of providing the necessary management service. If communications between the primary node and the served node are later restored, the served node will solicit the primary node to resume supplying the management service. If the primary node accepts, the served node revokes the authorization of the backup node.

FIG. 1

The present invention relates to computer networks and more particularly to a device and a method for providing dynamic backup and recovery of focal points in a network utilizing focal point architecture.

The importance of computer networks in day-to-day business operations has become a fact of life for many enterprises. The ability of an enterprise to effectively manage the resources of a computer network becomes increasingly important to the enterprise as its use of the network intensifies and as the network itself becomes larger and more complex.

The need for effective network management is most apparent for a large network consisting of individual computer systems or nodes interconnected through communication links. The topology or configuration of such a network typically changes constantly as nodes and/or links are added or dropped.

Because the network itself changes dynamically, a network manager should be capable of responding dynamically to changes in the network when providing management services. A suitable type of network manager is shown in United States patent 4.995,035, issued February 19, 1991, and assigned to the assignee of the present invention.

According to the teachings of this patent, nodes in a computer network are classified either as: (1) control nodes, called focal point (FP) or server nodes; or (2) managed nodes, called non-focal point (NFP) or served nodes. Focal point or server nodes are nodes capable of providing management services to other nodes in the network. One example of such a management service is the reception and handling of Alerts, which are messages indicating an event (typically an error event) occurring somewhere in the network. A network which implements the focal point/non-focal point concept is sometimes referred to as a focal point network even though every node in the network is not necessarily a focal point.

A focal point network may also include a third type of node, referred to as an end node. End nodes may receive management services from focal point nodes either directly or indirectly through intermediate non-focal point nodes. End nodes will rarely be mentioned in the following paragraphs. Where the discussion refers to non-focal point nodes, the reference may be interpreted as including end nodes which receive management services through such non-focal point nodes.

A server/served relationship may be established at the request of either of the two potentially-paired nodes. For example, node A may offer to provide a particular management service to node B. If node B accepts the offer, the server/served relationship is established for the specified management service. Alternatively, node B may ask node A to provide the management service. If node A accepts, the same server/served relationship is established.

Regardless of how the server/served relationship is established, a served node is considered to be within a sphere of control of the server node. Each server node maintains a Sphere Of Control or SOC table identifying each served node and the type of management service being provided to that node.

There is more than one kind of focal point node. The referenced patent identifies three different types of focal point nodes. A primary focal point node is a node which has been explicitly defined as a provider of a particular management service to one or more non-focal point nodes. A secondary focal point node is a node which is available to non-focal point nodes that have not yet been explicitly assigned a primary focal point node. A secondary focal point node, by definition, acts as a default node. The terms "secondary" and "default" can be used interchangeably in referring to this type of node. A backup focal point node is a node that can provide a management service to a non-focal point node when the designated primary focal point node for that node becomes unavailable.

For the sake of brevity, the term "focal point" may not be used when referring to the different types of focal point nodes. Specifically, the terms "primary node", "default node" and "backup node" may be used when referring to focal point nodes having primary, default and backup roles, respectively. Similarly, a general term "served node" may be used to refer to any node that receives a management service from another node, whether that node is a network (or non-focal point) node or an end node.

The referenced patent describes processes for establishing backup/primary relationships and for activating a backup node when the associated primary node becomes unavailable.

According to the patent, a prospective backup node "bids" for that role by sending a "Request to be Your Backup Focal Point" message to the prospective primary node. If the request is accepted by the prospective primary node, a session is established between the two nodes.

If a node has been accepted as a backup node, that node must know about the non-focal point nodes that are served by the primary node. The backup node acquires that information from the Sphere of Control table maintained in the primary node.

As long as the session between the backup and primary nodes is maintained, the backup node will appear inactive or dormant to any non-focal point nodes served by the primary node.

If, however, the session between the backup and primary nodes fails and cannot be restored, the backup node will notify a network operator of that fact and allow the operator to decide whether the backup node should attempt to establish sessions with each node formerly served by the primary node. The theory is that the network operator will have some insight into why the session between the backup and primary nodes cannot be reestablished and will know whether it is appropriate for the backup node to provide management services to the non-focal point nodes.

If the network operator decides it is appropriate, the backup node attempts to establish sessions with each served non-focal point node by sending a message to each such node offering to provide backup management services.

There are problems with the process described above. For one thing, the establishment of a backup/primary node relationship depends on the ability of the two nodes to establish and maintain a session between them. If the session can't be established, a backup node may not be defined in the system.

Also, assuming a backup/primary relationship is established between two nodes, the fact that the required session between those two nodes fails doesn't necessarily mean the primary node has become incapable of supplying a needed management service to the non-focal point nodes. If the primary node is still operating properly and only the backup/primary session has failed, a bid by the backup node to the network operator to provide management services will be a waste of system resources.

Further, even if backup management service is needed, a network operator must first authorize the backup node to attempt to communicate with nodes formerly served by the primary node. A requirement of operator authorization increases the chances that the supply of the needed management service may be disrupted with adverse consequences at the served node needing the service.

The present invention is a system and method for dealing with the problems for establishing backup focal point services in a focal point network.

The invention is intended for use in a computer network having a plurality of interconnected nodes. Some of the nodes are categorized as focal point nodes while others are categorized as non-focal point nodes. Focal point nodes provide management services to non-focal point nodes, Focal point nodes can further be characterized either as primary or backup focal point nodes. The invention may be embodied as a method practiced at a non-focal point node. The method includes the step of monitoring communications between the non-focal point node and its primary focal point node to detect communication failures. If a communication failure occurs, the non-focal point node generates a takeover request. The takeover request is forwarded directly to a previously designated backup focal point node to authorize hat node to immediately begin providing the management service previously provided by the primary focal point node.

While the specification concludes with claims particularly pointing out and distinctly claiming that which is regarded as the present invention, further details of a preferred embodiment of the invention may be more readily ascertained from the following detailed description when read in conjunction with the accompanying drawings wherein:

Figure 1 is schematic of a network including both server (focal point) nodes and served (non-focal point and end) nodes;

Figure 2 is a schematic representation of functional components included in a node acting as a focal point node;

Figure 3 is a schematic representation of functional components included in a node acting as a non-focal point node;

Figure 4, consisting of Figures 4A and 4B, taken together is a flow chart of a dynamic backup and recovery process implemented in accordance with the present invention; and

Figure 5 shows the message flows that occur in the course of the process illustrated in Figure 4.

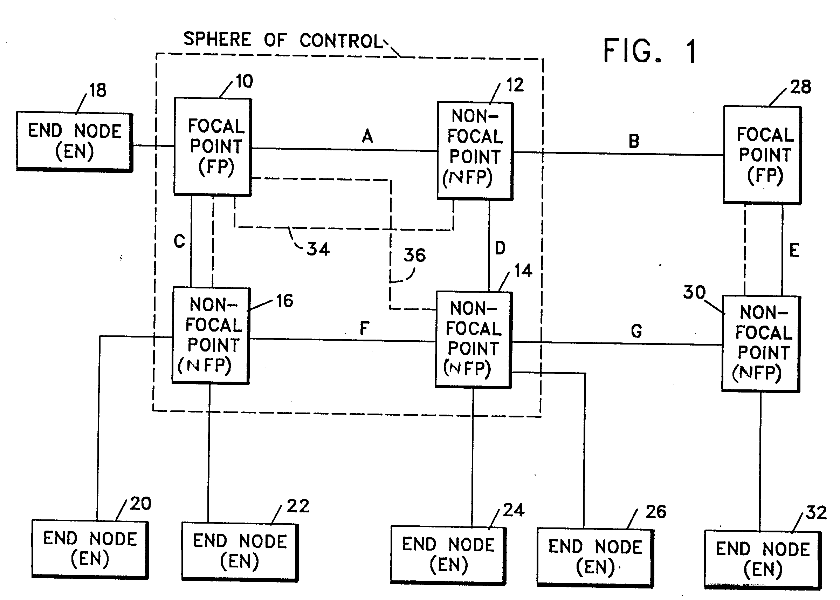

Figure 1 is a block diagram of a computer network which implements the focal point architecture referred to briefly above and within which the present invention may be practiced. The network is shown as having a plurality of network nodes 10, 12, 14, 16, 28 and 30. Network nodes normally include host processors controlled by an operating system program and running various application programs, including communications programs used in communicating with other nodes. The network nodes are interconnected by communications links A, B, C, D, E, F and G.

The network also includes a plurality of end nodes 18, 20, 22, 24, 26, and 32, each of which is connected to one of the network nodes. End nodes may include devices such as intelligent terminals, printers or small computers. End nodes differ from network nodes in that end nodes do not provide certain network services provided by network nodes.

During network operation, the network nodes may take on the roles of focal point or non-focal points. Figure 1 arbitrarily shows nodes 10 and 28 as focal point nodes and nodes 12, 14, 16 and 30 as non-focal point nodes. A focal point node is a network node that is currently providing at least one network management service to another node in the network. In the Figure, node 10 is shown acting as a focal point for a management service being provided to non-focal point nodes 12, 14 and 16. The functional links by which node 10 provides the management service to nodes 12, 14 and 16 are represented by dashed lines 34, 36 and 38, respectively.

Any non-focal point node receiving at least one management service from a focal point node at a given time is referred to as being within the sphere of control of the focal point node. For example, in the network shown in Figure 1, non-focal point nodes 12, 14 and 16 are shown within the sphere of control of focal point node 10.

To fully understand the focal point concept, several points must be remembered. First, the same network node may concurrently be both (1) a focal point to any node to which it is providing a management service and (2) a non-focal point node to any node from which it is receiving a management service. Second, the status of a node (focal point v. non-focal point) can change dynamically during network operations. As noted earlier, either of two potentially-paired nodes may request the establishment of a focal point/non-focal point (or server/served) relationship.

Third, any server/served relationship is limited to a particular type of management service; e.g., the handling of Alerts. Different sets of server/served relationships may exist concurrently between the same nodes for different types of management services.

Given these points, it becomes clear that Figure 1 is basically a "snapshot" of the way in which a network provides a particular management service at a given time. For a different management service being provided at the same time, the "snapshot" might look entirely different. For the same management service but at a different time, the "snapshot" might also look entirely different.

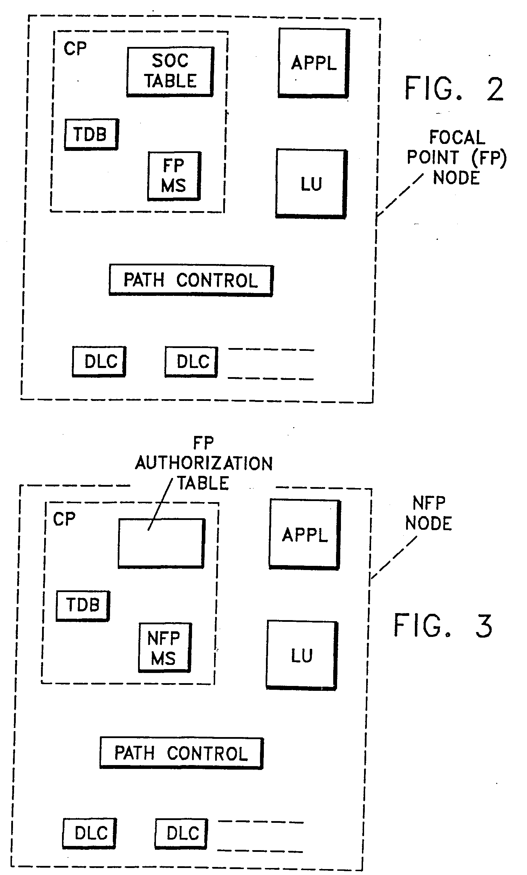

Figure 2 is a schematic representation of the major components of a node performing a focal point function. Many of the major components exist in any node which implements a known APPN system architecture. Details of the components are not required to understand how to make and use the present invention. A reader still interested in component details may find them in:

1. "Advanced Program to Program Communication and Advanced Peer-to-Peer Networking User's Guide", a manual available from the assignee of the present invention as publication SC21-95988, and

2. "Advanced Peer-to-Peer Networking (APPN) for AS/400 System", available from the assignee of the present invention as publication GC24-3287.

The following description is of functional components. In reading the description, it should be kept in mind that the functions are actually performed by hardware or, more likely, by programs being executed in combination with hardware.

A focal point node includes a control point or CP, one or more application programs (APPL), a logical unit (LU), path control, a topology database (TDB), and a plurality of data link control (DLC) modules.

Each DLC module provides a protocol conversion function which allows any message leaving the focal point node to be converted to a format which complies with the requirements of one of the communications links. Having multiple DLC modules allows messages to be converted to different formats. The path control module provides routing functions needed to transfer a message from a source to a destination node.

The CP or control point provides control functions for the node, such as establishing sessions, calculating routes, providing directory services, etc. In providing certain services, the CP may use the node's topology database (TDB) which defines the nodes in the network and the communications links which connect those nodes. Finally, the logical unit or LU provides an interface between a user (including an application program) and the remainder of the network.

The components or modules described immediately above exist in any APPN node. To implement the focal point concept, Sphere of Control (SOC) tables and a focal point management services (FP MS) program are added to the node. A different SOC table may exist for each different management service that a node may provide. Each SOC table contains a list of all network nodes for which the local node may be responsible. The list also contains an indicator of the current status of the relationship between the local node and each of the other nodes in the list. At a given point in time, the relationship may be active or inactive for a number of reasons. Further details about the SOC table may be found in U.S. Patent 4,995,035, referenced earlier.

A focal point management services (FPMS) program controls the focal point functions of the node. The FPMS program controls message exchanges with a non-focal point node, the type of focal point node role being assumed by the local node and the types of network management services being provided by the node. As pointed out in the referenced patent, a focal point node may be a primary node, a secondary or default node or a back-up node. The differences between the types of focal point nodes are elaborated on in the patent.

A network node acting as a non-focal point or served node has the same APPN components as a focal point node. A non-focal point node also contains an FP authorization table and a non-focal point management services (NFP MS) program. The additions allow a non-focal point node to respond to a focal point node and to exchange messages which cause the non-focal point node to transmit management services information to the focal point node. The FP authorization table lists focal point names, management services (MS) keys or identifiers, and focal point types. The NFP MS program controls the node as it performs non-focal point functions.

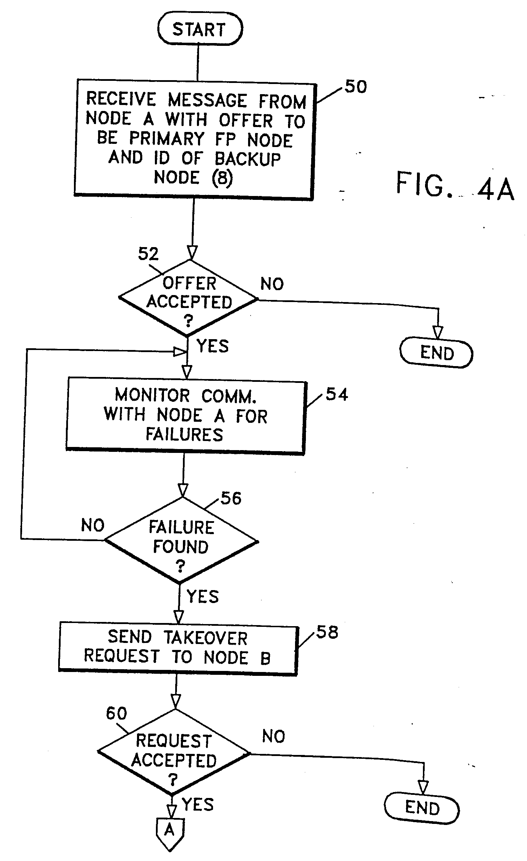

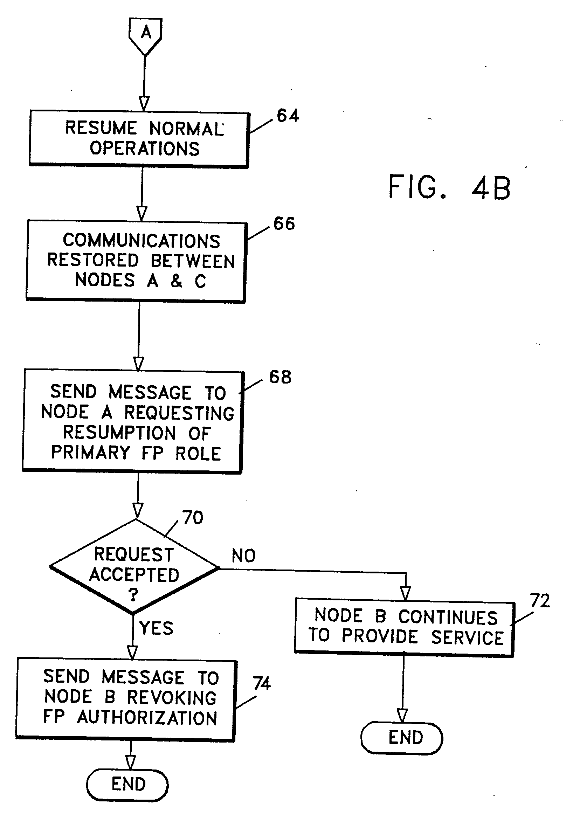

Figure 4, consisting of Figures 4A and 4B, taken together illustrates an improved process for (1) establishing a primary/backup node relationship, (2) for non-disruptively transferring focal point responsabilities to the backup node upon a communications failure between the primary node and a served node, and (3) reestablishing the relationship between the primary node and the served node once communications have been restored.

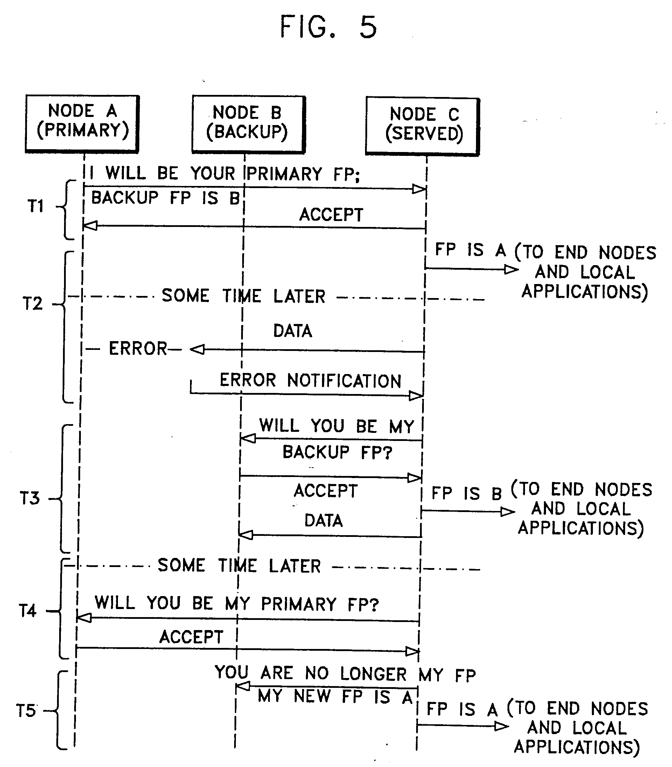

Referring momentarily to Figure 5, three nodes A, B and C are shown in simple box form. Node A, identified as "Primary", is a node which initially has the responsibility of providing a management service to one or more served nodes. Node B, identified as "Backup", is a node which can assume the responsibility of providing the management service to served nodes under certain conditions. Node C, identified as "Served", is a node which expects to receive the management service either from the primary node or the backup node.

The process described in Figure 4 is one that is performed at Node C, the served node. References to Nodes A and B should be interpreted in light of Figure 5 and the above descriptions of those nodes.

During the initial phase of the process of establishing the relationships among the primary, backup and served nodes, the primary node transmits a message to the served node, offering to provide a management service to the served node. The message identifies a proposed backup node. The primary node will have previously learned of the identity of the backup node either through network flows or as a result of system definition by a network operator.

The served node receives the message from the primary node in an operation 50. If the served node accepts the offer in an operation 52, the identity of both the primary node and the backup node are written into memory at the served node. If the served node rejects the offer, the attempt to establish the node relationships is ended.

Assuming the served node agrees to have the primary node provide the management service, communications between the primary node and the served node are then monitored (operations 54 and 56) for failures. The backup node is not involved during normal (non-failure) operation and need not necessarily have a session in place with either the primary node or the served node during this time.

If a communications failure is indicated (operation 56), the served node generates a takeover request that is sent directly to the designated backup node in an operation 58. If the backup node rejects the request, it will send a notice of rejection to the served node in an operation 60.

If, however, the backup node accepts the request, it assumes the responsibility of providing the management service to the served node. Normal operations are resumed (operation 64) at the served node. As a result of normal network data flows, the served node will know (operation 66) when communications have been restored between the primary node and the served node. The served node will then send a message (operation 68) directly to the primary node, asking that it once again provide the management service.

If the request from the served node is rejected, the backup node will continue to provide the management service as indicated by block 72.

If, however, the request is accepted, the original primary node will once again take over the responsibility of providing the management service to the served node. The served node will respond by sending a message (operation 74) to the backup node, revoking the backup node's authority to supply the management service.

Messages which flow during execution of the process described above are reproduced in text form in chronological order in Figure 5. Referring to Figures 4 and 5 together, the messages which flow in time zone T1 are ones which occur in the course of operations 50 and 52.

One thing should be noted. Figure 5 shows node C distributing a "FP is A" message to other nodes, not shown in the drawing. As mentioned earlier, a non-focal point node (such as node C) may support end nodes which, technically, are not considered part of the focal point network that includes nodes A and B. It is to such end nodes and to application programs running at the non-focal point node that the "FP is A" and similar messages are being directed.

The messages which flow in time zone T2 correspond to operations identified as operations 54 and 56 in the flow chart. The messages in time zone T3 are a result of operations beginning at operation 58 and ending between operations 64 and 66 in the flow chart. Time zone T4 covers the process beginning with a positive response to operation 66 and ending with operation 70. Time zone T5 covers the message transmitted as a result of operation 74 in the process.

While there has been described what is considered to be a preferred embodiment of the present invention, variations and modifications in that embodiment may occur to those skilled in the art once they are made aware of the basic concepts of the invention. Therefore, it is intended that the appended claims shall be construed to include both the preferred embodiment and all such variations and modifications as fall within the true spirit and scope of the invention.

## Claims

1. A device, for use in a computer network having a plurality of interconnected nodes wherein at least some of said nodes are focal point nodes capable of providing a network management service to other non-focal point nodes and wherein focal point nodes may be categorized as primary focal point nodes said device or backup focal point nodes, means located at a non-focal point node for dynamically reconfiguring the network, characterized in that it comprises :

   means for detecting errors in communications between the non-focal point node and the primary focal point node;

   means responsive to detected communications errors to generate a takeover request addressed to the backup focal point for the primary focal point;

   means for forwarding the takeover request to the backup focal point to authorize the backup focal point to be-in providing the management service formerly provided by the primary focal point node.

2.  The device as defined in claim 1 characterized in that it further includes :

    means for subsequently attempting to establish a relationship with a node capable of acting as a primary focal point node; and

    means responsive upon successful establishment of such a relationship to revoke the authorization of the backup focal point node.

3.  A method for use in a computer network having a plurality of interconnected nodes wherein the nodes are categorized either as focal point nodes capable of supplying a network management services to other nodes or as non-focal nodes capable of receiving network management service supplied by focal point nodes and wherein focal point nodes may be primary or backup focal point nodes, said method of dynamically reconfiguring the network being practiced at a non-focal point node is characterized in that it comprises the steps of:

    a) monitoring communications between the non-focal point node and its primary focal point node to detect errors in such communications;

    b) responding to errors indicating a failure in communications from the.primary focal point node to generate a takeover request; and

    c) forwarding the takeover request to the designated backup focal point node to authorize the backup focal point node to begin providing the management service formerly provided by the primary focal point node.

4.  The method as defined in claim 3 further including the steps of responding to successful restoration of a primary focal point relationship to revoke the authorization previously riven the backup focal point node.

FIG. 1

FIG. 2

FOCAL POINT (FP) NODE

FIG. 3

NFP NODE

START

RECEIVE MESSAGE FROM NODE A WITH OFFER TO BE PRIMARY FP NODE AND ID OF BACKUP NODE (8) — 50

52
OFFER ACCEPTED ? — NO — END

YES

MONITOR COMM. WITH NODE A FOR FAILURES — 54

56
NO — FAILURE FOUND ?

YES

SEND TAKEOVER REQUEST TO NODE B — 58

60
REQUEST ACCEPTED ? — NO — END

YES

A

FIG. 4A

A

RESUME NORMAL OPERATIONS | 64

FIG. 4B

COMMUNICATIONS RESTORED BETWEEN NODES A & C | 66

SEND MESSAGE TO NODE A REQUESTING RESUMPTION OF PRIMARY FP ROLE | 68

REQUEST ACCEPTED ? | 70

NO

NODE B CONTINUES TO PROVIDE SERVICE | 72

YES

SEND MESSAGE TO NODE B REVOKING FP AUTHORIZATION | 74

END

END

# FIG. 5